# FASCICULE DE BREVET EUROPEEN

(11) **EP 1 053 163 B1**
(45) Date de publication et mention de la délivrance du brevet: **15.09.2004**
(21) Numéro de dépôt: 99901701.5
(22) Date de dépôt: 03.02.1999
(51) Int. Cl.: B62D 1/16, B62D 5/04

(54) **COLONNE DE DIRECTION A COUPLEMETRE**
LENKSÄULE MIT DREHMOMENTSENSOR
STEERING COLUMN WITH TORQUEMETER

(30) Priorité: 04.02.1998 FR 9801292
(43) Date de publication de la demande: 22.11.2000
(73) Titulaire: SNR ROULEMENTS, F-74010 Annecy Cedex (FR)
(72) Inventeur: NICOT, Christophe, F-74330 Epagny (FR)
(74) Mandataire: Keib, Gérard
(86) Numéro de dépôt international: PCT/FR1999/000228
(87) Numéro de publication internationale: WO 1999/039965

(56) Documents cités:
- EP-A- 0 442 091
- EP-A- 0 775 624
- WO-A-97/08527
- FR-A- 2 478 004
- FR-A- 2 718 699

## Description

L'invention se rapporte au domaine technique des colonnes de direction de véhicules.

Par colonne de direction, l'on désigne conventionnellement, un élément tubulaire, fixé à la carrosserie du véhicule, sous le tableau de bord, qui guide et supporte l'arbre de transmission relié au volant de direction.

Ce volant de direction est alors un organe de commande manuelle, relié aux roues directrices et utilisé par le conducteur pour diriger le véhicule.

L'invention concerne également les colonnes de direction découplées. Contrairement aux colonnes de direction conventionnelles, les colonnes de direction découplées ne sont pas associées à un boîtier de direction transformant le mouvement circulaire du volant de direction en déplacement angulaire de la bielle pendante qui provoque le braquage de roues.

Tout au contraire, il n'y a pas, pour ces directions découplées, de liaison mécanique directe entre le volant et les roues reposant sur le sol, que le véhicule soit réel ou appartienne à un système de simulation.

Cette simulation peut être d'objet ludique; liée à un apprentissage dans les auto-écoles ou bien encore liée à une simulation de conduite interactive pour les besoins de constructeurs automobiles.

Dans de tels simulateurs, la restitution d'efforts au niveau du volant grâce à un mécanisme générant un couple résistant sur le volant en fonction du type de véhicule à simuler, équipé ou non d'une direction assistée, doit tenir compte des conditions de roulage à recréer.

La mesure du couple appliquée au volant est par conséquent essentielle pour assurer une bonne simulation, en temps réel.

La mesure de couple sur l'arbre du volant de direction est également très importante dans les servodirections ou directions assistées.

En effet, le déclenchement de l'assistance dépend notamment du couple appliqué par le conducteur sur le volant.

Le couplemètre, ou capteur de couple, utilisé dans les servodirections émet un signal indicatif du couple de braquage exercé par le conducteur sur le volant et donc sur l'arbre de transmission de la colonne de direction du véhicule.

Ce signal est conventionnellement adressé à un calculateur d'assistance de direction qui déclenche l'assistance, en commandant par exemple un moteur électrique, dans le cas d'une servodirection électrique.

La plupart des couplemètres comprennent une barre de torsion.

En élasticité linéaire isotrope, le couple exercé en torsion pure sur une barre cylindrique pleine de section circulaire varie pour un matériau donné, en fonction de la puissance quatre du diamètre de la barre, à angle de torsion fixé.

Par conséquent, le fait de réaliser une zone de section réduite dans la colonne de direction permet une concentration et une amplification de déformation en torsion dans cette zone, servant à la mesure du couple, au détriment de la rigidité et de la résistance mécanique de ladite barre de torsion.

Des exemples de couplemètres à barre de torsion pour servodirections peuvent être trouvés dans les documents suivants :
- WO-97 08 527, EP-453 344, EP-325 517, FR-2 738 339 issus de la demanderesse,
ainsi que dans les autres documents suivants :
- demandes de brevet au Japon publiées sous les N° JP-43 17 862, JP-50 77 743, JP-57 19 81 71, JP-59 07 58 64, JP-57 08 77 62, JP-59 11 85 77, JP-61 14 674, JP-62 13 43 71, JP-62 09 44 70, JP-63 29 037, JP-63 09 36 73, JP-30 79 473 ;
- brevets européens publiés sous les N° EP-369 311, EP-396 895, EP-418 763. EP-515 052, EP-555 987, EP-562 426, EP-566 168, EP-566 619, EP-652 424, EP-638 791, EF-673 828, EP-681 955, EP-728 653, EP-738 647, EP-765 795, EP-738 648, EP-770 539, EP-802 107 ;
- demandes internationales de brevet PCT publiées sous les N° 87/02 319, WO-92/20 560, WO-95/19 557, WO-96/06 330 ;
- demandes de brevet en France, au Royaume-Uni et aux Etats-Unis publiées sous les N° suivants : GB-2 306 641, FR-2 705 455, US-4 874 053, US-4 907 668, US-4 984 474, US-5 123 279, US-5 394 760, US-5 515 736, US-5 578 767, US-5 585 573, US-5 616 849, US-5 641 916.

Les couplemètres à barre de torsion présentent un encombrement important. Leur mise en place nécessite deux paliers supplémentaires pour atténuer les effets de flexion parasites notamment.

Le document FR-2 724 018 est relatif à un capteur de couple comportant un dispositif à jauges de mesure d'allongement. Ce dispositif à jauges est disposé sur un corps de mesure, soumis à des tensions mécaniques sous l'action d'un couple.

Le document EP-442 091 A décrit une installation de mesure de l'angle de rotation ou du couple d'un élément rotatif ou fixe d'une machine, comportant un élément de torsion en forme de roue à rayons relié à plusieurs éléments de mesure, au moins un rayon de la roue à rayons étant coupé pour que les parties du ou des rayons soient appliquées l'une contre l'autre lors du déplacement d'une flexion prédéterminée des autres rayons. Le dispositif de mesure met en oeuvre les courants de Foucault.

Les caractéristiques suivantes des moyens de mesure du couple définis dans la revendication 1 sont divulguées par le document EP0442091A:
- un premier anneau extérieur déplaçable;
- un second anneau extérieur sensiblement non contraint placé à distance de l'anneau extérieur déplaçable;
- un anneau intérieur solidaire en rotation de l'arbre sur lequel s'applique le couple à mesurer, l'anneau extérieur déplaçable étant apte à être solidaire rigidement de l'élément d'entraînement de l'arbre, l'anneau extérieur déplaçable étant assemblé à l'anneau intérieur par au moins un moyen déformable élastiquement;
- l'anneau extérieur sensiblement non contraint étant assemblé à l'anneau intérieur par au moins un moyen sensiblement non contraint;
- le capteur comprenant des moyens de mesure des petits déplacements relatifs de l'anneau extérieur déplaçable par rapport à l'anneau extérieur sensiblement non contraint lorsqu'un couple est appliqué sur l'arbre par l'élément d'entraînement.

L'invention se rapporte à un système de mesure de couple ne présentant pas les inconvénients des systèmes connus dans l'art antérieur pour les colonnes de direction et pouvant être implanté, de manière éventuellement réversible, en tout point de la colonne de direction, ce dispositif étant insensible aux perturbations électromagnétiques et étant rigide, monobloc, de forte inertie, de dimension réduite et de faible coût.

A cette fin, la colonne de direction selon l'invention comporte les caractéristiques définies dans la revendication 1.

Dans un mode de réalisation, la colonne est de type découplée.

Dans un autre mode de réalisation, la colonne comporte un boîtier de direction transformant le mouvement de rotation de l'arbre de transmission en déplacement angulaire de la bielle pendante qui provoque le braquage de roues.

La colonne comporte des moyens d'assistance dont le déclenchement dépend notamment du couple appliqué sur l'arbre de transmission par la manoeuvre de l'organe de commande.

Des moyens calculateurs de l'assistance sont prévus, adressant des signaux aux moyens de commande des moyens d'assistance, en fonction du couple de braquage appliqué à l'arbre de transmission.

Les moyens de mesure de couple appliqué à l'arbre de transmission sont formés d'un ensemble présentant une certaine rigidité comportant :
- un premier anneau extérieur déplaçable
- un second anneau extérieur, sensiblement non contraint placé à distance de l'anneau extérieur déplaçable
- un anneau intérieur solidaire en rotation d'une colonne sur laquelle s'applique le couple à mesurer, l'anneau extérieur déplaçable étant apte à être solidaire rigidement du moyen appliquant le couple à mesurer sur la colonne, l'anneau extérieur déplaçable étant assemblé à l'anneau intérieur par au moins un moyen déformable élastiquement
l'anneau extérieur, sensiblement non contraint étant assemblé à l'anneau intérieur par au moins un moyen sensiblement non contraint
le capteur comprenant des moyens de mesure du petit déplacement relatif de l'anneau extérieur déplaçable par rapport à l'anneau extérieur sensiblement non contraint lorsqu'un couple est appliqué sur la colonne par le moyen.

D'autres objets et avantages de l'invention apparaîtront au cours de la description suivante de modes de réalisation, description qui va être faite en se référant aux dessins annexés dans lesquels :
- les figures 1a et 1b sont des schémas synoptiques de directions de véhicule comprenant un système de mesure de couple selon l'invention ;
- la figure 2 est une vue en perspective éclatée d'une colonne de direction comportant un capteur de couple à corps d'épreuve en flexion, intégré au volant, selon un mode de réalisation de l'invention ;
- la figure 3 est une vue en perspective du corps d'épreuve représentée en figure 2 ;

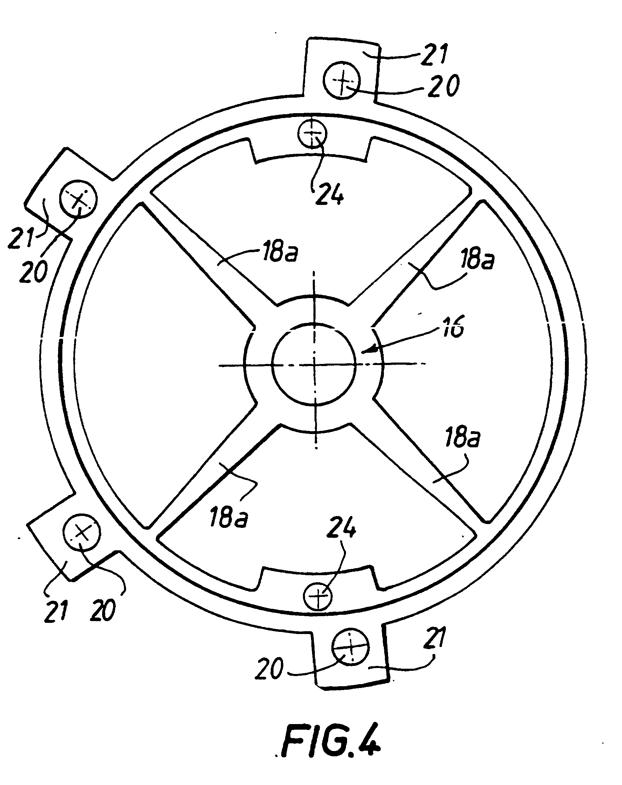

- la figure 4 est une vue de face d'un corps d'épreuve en flexion pouvant prendre lieu et place de celui représentée en figures 1 et 2 ;
- la figure 5 est une vue d'un corps d'épreuve en torsion pouvant prendre lieu et place des corps d'épreuve représentés en figures 1 à 4 ;

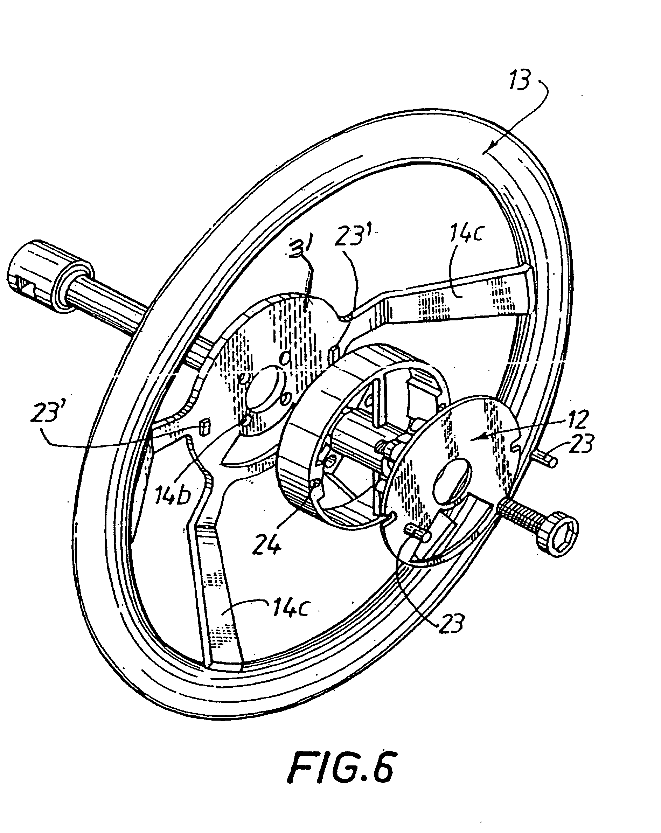

- la figure 6 est une vue en perspective éclatée d'une colonne de direction de véhicule comprenant un corps d'épreuve tel que représenté en figure 5 ;

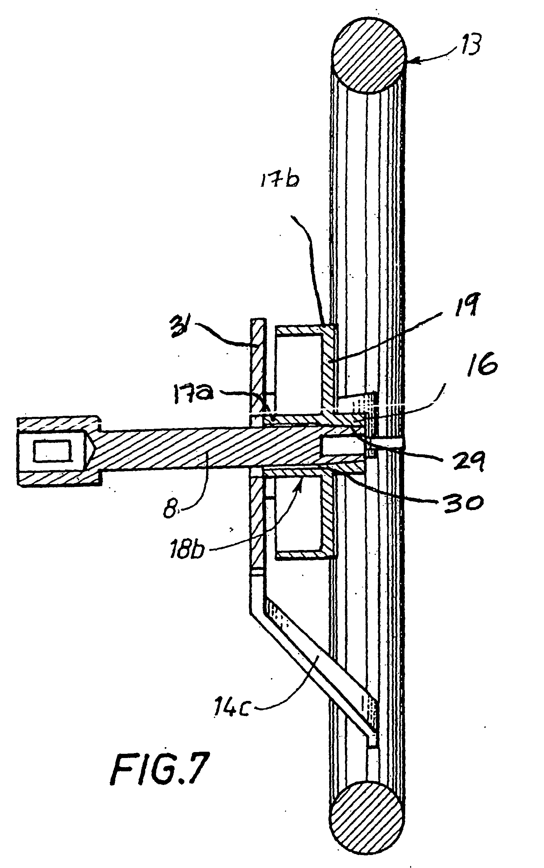

- La figure 7 est une vue en coupe selon la ligne VII-VII de la figure 6.

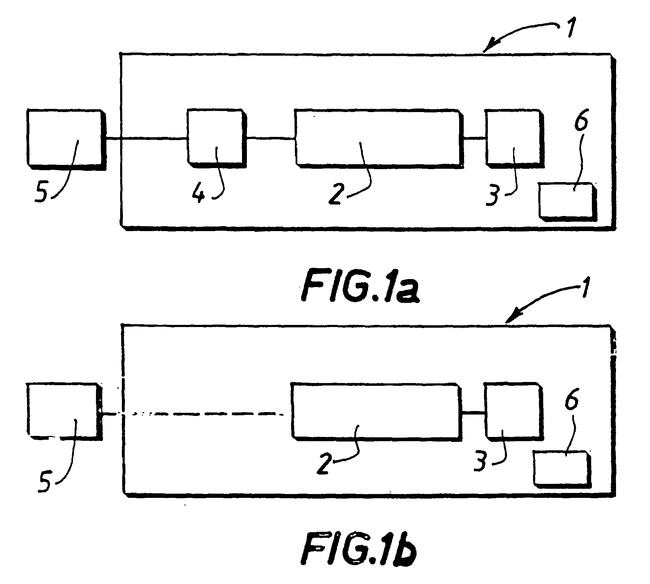

L'on se rapporte tout d'abord à la figure 1.

Le dispositif de direction 1 dont un schéma synoptique est représenté en figure 1, est destiné à être intégré dans un véhicule, par exemple une automobile.

Ce dispositif 1 comprend une colonne de direction 2. Cette colonne 2 peut être télescopique, le cas échéant, et/ou d'inclinaison variable par rapport à la carrosserie et au conducteur.

Un volant 3 est associé de manière éventuellement amovible à cette colonne de direction.

Par volant de direction, on désigne un organe de commande manuelle utilisé par le conducteur pour diriger le véhicule.

Dans un mode de réalisation, la colonne de direction 2 est associée à un boîtier de direction 4, par exemple une crémaillère, transformant le mouvement circulaire du volant de direction 3 en déplacement angulaire de la bielle pendante qui provoque le braquage de roues 5.

Ce mode de réalisation correspond au diagramme a) de la figure 1.

Dans un autre mode de réalisation, les roues 5 ne sont pas liées par une série d'éléments mécaniques avec le volant 3. La direction est alors dite découplée.

Ce mode de réalisation correspond au diagramme synoptique b) de la figure 1.

Un système de mesure de couple 6 est associé au dispositif de direction 1. Ce système de mesure de couple pouvant être implanté, de manière éventuellement amovible, en tout point du dispositif de direction, aucun lien univoque n'a été représenté entre ce système de mesure 6 et les différents éléments du dispositif de direction 1, dans les schémas synoptiques de la figure 1.

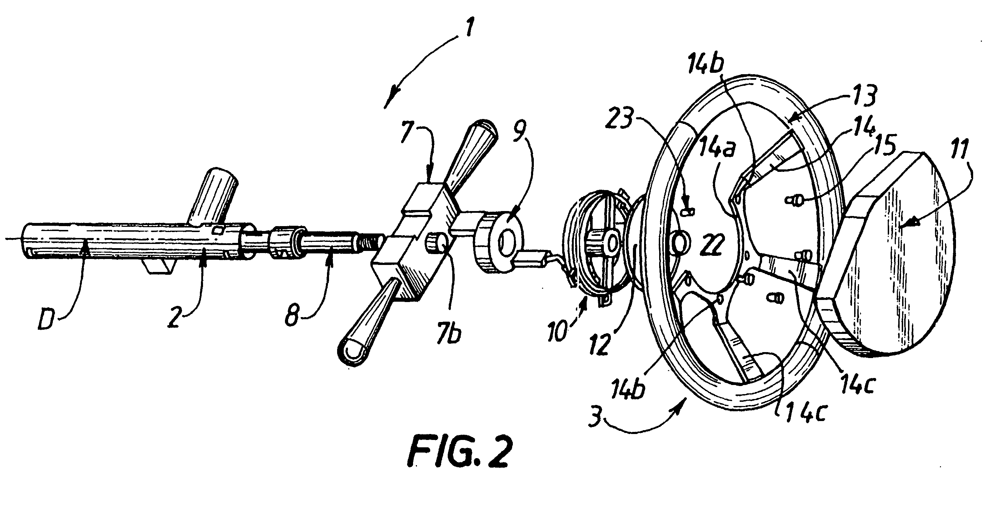

L'on se réfère maintenant à la figure 2 qui est une vue en perspective éclatée d'une colonne de direction comportant un capteur de couple à corps d'épreuve en flexion, rapporté au volant, selon un mode de réalisation.

Le dispositif de direction 1 représenté en figure 2 comporte un ensemble de commandes sous volant 7.

L'ensemble de commandes sous volant 7 comprend un bloc central comportant un trou traversant 7b de diamètre tel que l'ensemble 7 peut être ajusté sur l'arbre de transmission 8 de la colonne de direction 2.

Dans le mode de réalisation présenté, la partie extrême de l'arbre de transmission est de section transversale sensiblement circulaire, le trou traversant 7b étant également circulaire en section transversale, i.e. perpendiculaire à l'axe principal D du dispositif de direction 1.

Le dispositif de direction 1 comprend un connecteur tournant 9 pourvu de deux broches et d'un trou central traversant.

Le dispositif de direction 1 comprend en outre un couplemètre dont le corps d'épreuve est rapporté dans le moyeu 10 du volant 3.

Le cas échéant, ainsi qu'il est représenté en figure 1, le volant 3 comporte en sa partie centrale un boîtier de coussin gonflable de sécurité 11.

Dans ce cas, le connecteur tournant 9 peut servir tant à la connectique du boîtier de coussin gonflable 11 qu'à la connexion entre le circuit électronique 12 du couplemètre de servodirection et le moyen d'assistance.

Dans d'autres modes de réalisation, le dispositif de direction 1 est dépourvu de boîtier de coussin gonflable.

Le volant 3 comporte une jante 13 et une armature 14.

Dans le mode de réalisation représenté, l'armature 14 se présente sous la forme d'un arceau transversal 14a relié à la jante 13 par quatre bras inclinés 14c.

L'arceau transversal 14a est percé de trous traversant 14b permettant le passage des vis 15 de fixation du moyeu 10 sur le volant 3.

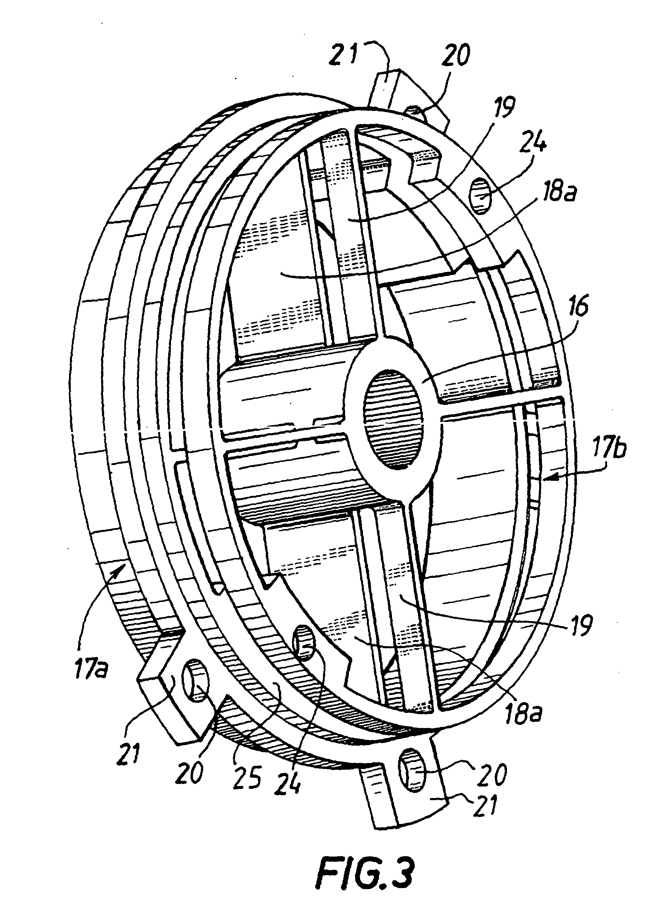

Le moyeu 10 va maintenant être décrit en référence aux figures 3 et suivantes.

Dans le mode de réalisation représenté en figure 3, le moyeu 10 comporte un corps d'épreuve en flexion.

Un anneau intérieur 16 cylindrique et deux anneaux extérieurs 17a et 17b sont reliés par des poutres élastiques déformables en flexion 18a et des poutres non déformées 19. Plus précisément, l'anneau extérieur arrière 17a, fixé au moyeu 10 du volant 3 par des vis 15 passant dans des trous 20 est relié à l'anneau intérieur 16 par l'intermédiaire de poutres élastiques déformables en flexion 18a.

Dans le mode de réalisation représenté, ces poutres déformables 18a sont au nombre de 4, régulièrement réparties, perpendiculairement à l'axe principal D.

L'anneau extérieur avant 17b est relié à l'anneau intérieur 16 par le biais de poutres radiales non déformées 19.

Dans le mode de réalisation représenté, ces poutres non déformées 19 sont au même nombre que les poutres déformables élastiquement en flexion 18a, les poutres 18a, 19 étant situées sensiblement selon deux plans radiaux perpendiculaires à l'axe principal D.

Dans d'autres modes de réalisation, non représentés, les poutres 19 sont au nombre de deux, trois ou quatre.

Dans d'autres modes de réalisation, non représentés, l'anneau extérieur 17b est relié à l'anneau intérieur par un voile ou une paroi annulaire.

L'anneau extérieur déformable 17a du moyeu 10 est associé rigidement à l'arceau 14a du volant 3, les vis 15 passant au travers des trous 14b de l'arceau 14a pour atteindre les trous 20 prévus dans les pattes d'attache 21 de l'anneau extérieur 17a.

Dans le même temps, une vis 22 fixe le volant 3 sur la colonne 2, l'ensemble de commandes sous volant 7, le connecteur tournant 9, le moyeu 10 se trouvant pris en sandwich entre l'arceau 14a du volant 3 et la colonne de direction, sur une longueur correspondant à la partie extrême de l'arbre de transmission 8 de la colonne 2.

Le circuit électronique 12 est rapporté ou collé, au moyeu 10.

Lorsque le conducteur exerce un effort sur la jante 13 du volant 3, l'anneau extérieur arrière 17a solidaire du volant 3 entraîne une déformation en flexion des poutres 18a, déformation d'autant plus forte que le couple résistant sur la colonne 2 est important.

L'anneau extérieur avant 17b, quant à lui reste sensiblement non contraint.

Sa position peut en conséquence servir de base de référence pour la mesure du déplacement de l'anneau extérieur arrière 17a.

L'anneau extérieur avant 17b porte des capteurs 23 de petits déplacements. Ces capteurs effectuent une détection locale et peuvent être disposés en nombre variable.

Dans le mode de réalisation représenté, ces capteurs 23 sont au nombre de deux et sont disposés dans des logements 24, ménagés dans l'anneau avant 17b, au droit de l'anneau arrière 17a.

Ces capteurs 23 peuvent être de tout type approprié : capteur optique, capacitifs, électromagnétique, magnéto-résistifs etc.

Dans un mode de réalisation, ces capteurs sont à effet Hall. Les générateurs de champs magnétiques possèdent alors, dans un mode de réalisation, une structure aimantée à directions d'aimantation antiparallèle et sont solidaires de l'arbre de transmission de la colonne de direction. Les sondes de Hall délivrent ainsi un signal proportionnel au couple de torsion par suite du décalage angulaire relatif des générateurs de champ par rapport aux sondes.

Chaque générateur de champ peut être constitué par deux aimants parallélépipédiques jointifs le long d'une de leur faces latérales, les vecteurs d'induction respectifs étant de sens opposés, perpendiculaires à ladite face d'appui.

Dans un autre mode de réalisation, ces capteurs sont à magnétorésistance (MR) ou à magnétorésistance géante (GMR).

Bien qu'une seule sonde à effet Hall 23 suffise à la mesure de petits déplacements, on peut, pour des raisons de fiabilité, disposer dans l'entrefer de mesure 25 plusieurs sondes afin de créer une redondance.

Chacune des sondes à effet Hall 23 peut posséder son propre circuit électronique associé.

Par comparaison ou combinaison des signaux délivrés par 2, 3, ou 4 sondes différentes, on peut détecter une défaillance éventuelle de l'une des sondes et assurer une excellente fiabilité au couplemètre.

L'épaisseur, la longueur, et la largeur des poutres ainsi que leur nombre leur répartition angulaire, le matériau employé pour les réaliser conditionne, ainsi qu'il apparaîtra clairement à l'homme du métier les caractéristiques suivantes :
- module d'inertie ;
- contrainte maximale dans les poutres, pour un couple maximum donné, par exemple à rupture ;
- valeur du couple minimum mesurable, pour une technique de mesure de petits déplacements donnés.

Le cas échéant, des moyens peuvent être prévus pour limiter le déplacement de l'anneau 17a. Par exemple deux poutres butées peuvent s'étendre radialement selon une direction transversale depuis l'anneau intérieur 16 vers l'anneau déformable 17a.

Ces butées permettent, le cas échéant, d'éviter une déformation plastique de poutres 18a.

Le corps d'épreuve peut être réalisé en un matériau choisi parmi le groupe comprenant : les aciers, les fontes, les alliages d'aluminium, les alliages de magnésium.

Un acier 35NCD16, une fonte à graphite sphéroïdal, un aluminium de la série 7000 peuvent par exemple être envisagés.

Le corps d'épreuve peut être moulé ou usiné, en fonction du matériel employé, de la géométrie des poutres, du coût admissible notamment, ainsi qu'il apparaîtra à l'homme du métier.

Lorsque le corps d'épreuve est moulé en aluminium ou en alliage de magnésium, le moulage peut être effectué avec un insert métallique comportant des cannelures de montage du corps d'épreuve sur l'arbre de transmission 8.

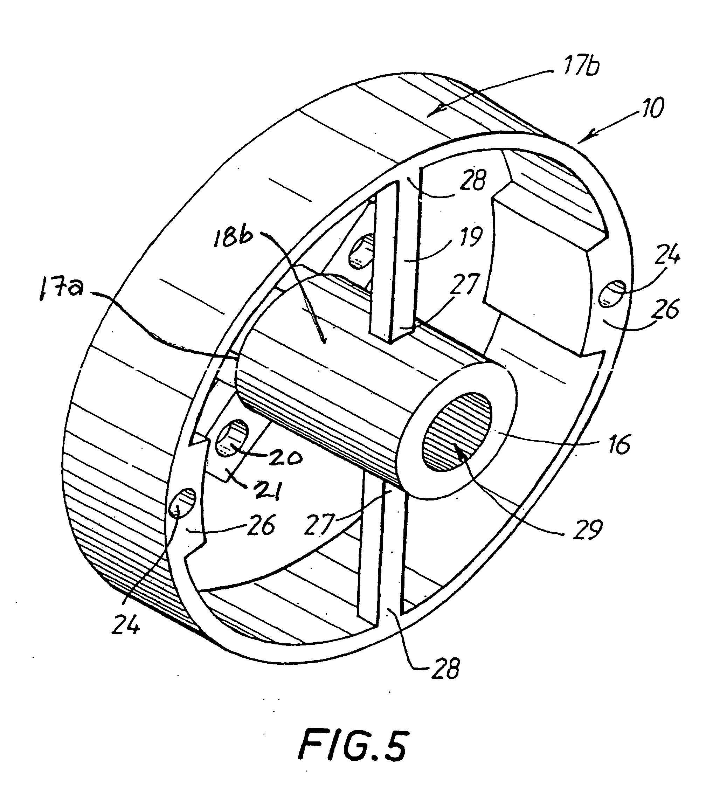

L'on se réfère maintenant à la figure 5 qui illustre un mode de réalisation d'un moyeu à corps d'épreuve en torsion.

Le moyeu 10 comporte un anneau extérieur non contraint 17b, de surface périphérique externe sensiblement cylindrique.

Cet anneau 17b est pourvu de deux logements 24, ménagés dans deux surépaisseurs 26, diamétralement opposés.

Entre ces surépaisseurs 26, la surface interne de l'anneau 17b est sensiblement cylindrique.

L'anneau 17b est assemblé à l'anneau intérieur 16 par au moins une poutre 19, un voile ou équivalent.

Dans le mode de réalisation représenté, deux poutres radiales 19, venues de matière avec l'anneau interne 16 et l'anneau extérieur non contraint 17b associe ces deux anneaux 16, 17b.

Ces poutres 19 sont, dans le mode de réalisation représenté, de section carrée sensiblement constante de leur pied 27 à leur tête 28 et sont sensiblement alignées.

L'anneau interne 16 comporte un trou traversant définissant un embout cannelé 29 de fixation et, à l'opposé, une surface d'appui 30 de la partie extrême de l'arbre de transmission 8, lorsque le corps d'épreuve est destiné à être incorporé en partie extrême de l'arbre de transmission 8.

Un tube déformable en torsion 18b relie l'anneau interne 16 à l'anneau extérieur déplaçable 17a.

Le cas échéant, ce tube peut être ajouré axialement, les lumières axiales ainsi réalisés séparant des poutres déformées en axitorsion.

Cet anneau extérieur déplaçable 17a est assemblé rigidement au moyeu d'application du couple sur l'arbre de transmission 8, à savoir le volant 3.

Des vis 15 assurent, via les trous 20, la fixation du moyeu 10 sur la plaque centrale transversale 31 de l'armature 14 du volant 3.

Cette plaque 31 est pourvu de trous 14b correspondant aux trous 20 du moyeu 10.

L'armature 14 du volant comporte, tout comme dans les modes de réalisation représentés en figure 2, plusieurs bras inclinés 14c reliant la plaque centrale transversale 31 à la jante 13 du volant 3.

Lorsque le moyeu 10 est monté sur un volant 3, de la manière représentée, l'anneau extérieur déformable solidaire de la plaque 31 et donc de la jante 13 du volant 3 est déplacé en rotation par rapport à l'anneau extérieur non contraint 17b.

La mesure de ce petit déplacement, par exemple par le biais de sondes de Hall 23 placées dans les logements 24 et d'aimants 23' fixés en regard sur la plaque 31 permet la mesure du couple appliquée par le conducteur et permet la commande de l'assistance après traitement du signal par la circuit électronique 12.

Ce circuit électronique 12 comporte, dans un mode de réalisation :
- une arrivée de courant pour l'alimentation en énergie des sondes de Hall ;
- un circuit de filtrage du signal provenant des sondes, afin d'éliminer le bruit de fond ;
- un module assurant la conversion analogique numérique du signal ;
- un module de contrôle et de compensation de dérive du signal émis par les sondes de Hall, en fonction de la température, par exemple dans une gamme -40°C +80°C ;
- un module de sécurité testant régulièrement le bon fonctionnement de chacune des sondes.

Le cas échéant, le circuit électronique 12 comporte un module permettant de fixer le seuil de déclenchement de l'assistance de direction, seuil correspondant à une valeur de couple déterminée, ou encore un module de transmission du signal sans fil ou sans contact.

Les capteurs de couple tels qu'ils viennent d'être représentés en référence aux figures 2 et suivantes peuvent, dans d'autres modes de réalisations, ne pas être rapportés ou intégrés au volant de direction, mais être placés en n'importe quel point entre le volant et les cardans de colonne de direction.

L'homme du métier ainsi qu'il lui apparaîtra clairement, doit tenir compte des facteurs suivants, notamment :
- le moteur d'assistance électrique éventuelle doit être placé avant l'antivol
- les volumes imposes par les crasntests (tests d'accident simuié ou essais de choc) et l'ergonomie du poste de conduite conditionnent l'encombrement général de la colonne de direction 2.

Le système de mesure de couple selon l'invention peut ainsi être implanté de manière éventuellement amovible, en tout point de la colonne de direction. Ce système de mesure de couple comporte un corps d'épreuve robuste, rigide, de faibles dimensions et dissociable de la géométrie de la colonne.

Le potentiel de standardisation est ainsi augmenté. La structure du capteur de couple permet d'éviter des études répétées d'intégration du couplemètre suivant les types de colonne envisagé.

## Revendications

1. Colonne de direction de véhicule comportant un organe de commande manuelle pour l'application d'un couple sur l'arbre de transmission de la colonne, ladite colonne étant pourvue de moyens de mesure du couple appliqué audit arbre de transmission, dans laquelle les moyens de mesure du couple appliqué à l'arbre de transmission sont formés d'un ensemble présentant une certaine rigidité comportant :
- un premier anneau extérieur déplaçable (17a) ;
- un second anneau extérieur, sensiblement non contraint (17b) placé à distance de l'anneau extérieur déplaçable (17a) ;
- un anneau intérieur (16) solidaire en rotation d'une colonne (2) sur laquelle s'applique le couple à mesurer, l'anneau extérieur déplaçable (17a) étant apte à être solidaire rigidement du moyen (5) appliquant le couple à mesurer sur la colonne, l'anneau extérieur déplaçable (17a) étant assemblé à l'anneau intérieur (16) par au moins un moyen déformable élastiquement (18a, 18b),
l'anneau extérieur, sensiblement non contraint (17b) étant assemblé à l'anneau intérieur (16) par au moins un moyen sensiblement non contraint ;
le capteur comprenant des moyens de mesure (23) du petit déplacement relatif de l'anneau extérieur déplaçable (17a) par rapport à l'anneau extérieur sensiblement non contraint (17b) lorsqu'un couple est appliqué sur la colonne (2) par le moyen (5) ;
l'anneau déplaçable (17a), Panneau extérieur sensiblement non contraint (17b) et l'anneau intérieur (16) étant venus de matière avec leurs éléments de liaison (18a, 18b, 19), l'anneau extérieur sensiblement non contraint (17b) portant les moyens de mesures (23).

2. Colonne de direction de véhicule selon la revendication 1, **caractérisée en ce que** le moyen déformable élastiquement associant la premier anneau extérieur déplaçable (17a) et l'anneau intérieur (16) est une poutre (18a) s'étendant radialement de l'anneau intérieur (16) vers l'anneau extérieur déplaçable (17a).

3. Colonne de direction de véhicule selon la revendication 2, **caractérisée en ce qu'**il comporte plusieurs poutres (18a) déformables élastiquement, s'étendant radialement de l'anneau intérieur (16) vers le premier anneau extérieur déplaçable (17a).

4. Colonne de direction de véhicule selon l'une quelconque des revendications 1 à 3, **caractérisée en ce que** le moyen sensiblement non contraint associant le second anneau extérieur sensiblement non contraint (17b) et l'anneau intérieur (16) est une poutre (19) s'étendant radialement de l'anneau intérieur (16) vers le second anneau extérieur sensiblement non contraint (17b).

5. Colonne de direction de véhicule selon la revendication 1, **caractérisée en ce que** le moyen déformable élastiquement associant l'anneau extérieur déplaçable (17a) à l'anneau intérieur (16) est un tube déformable en torsion (18b).

6. Colonne de direction de véhicule selon la revendication 5, **caractérisée en ce que** le moyen sensiblement non contraint associant le second anneau extérieur (17b) à l'anneau intérieur (16) est une poutre (19) s'étendant radialement de l'anneau intérieur (16) vers l'anneau extérieur déplaçable (17a).

7. Colonne de direction de véhicule selon la revendication 6, **caractérisée en ce que** deux poutres radiales (19) disposées suivant un diamètre de l'anneau extérieur sensiblement non contraint (17b) le relie à l'anneau intérieur (16).

8. Colonne de direction de véhicule selon l'une quelconque des revendications 1 à 7, **caractérisée en ce que** les moyens de mesure du petit déplacement relatif du premier anneau extérieur déplaçable (17a) par rapport au second anneau extérieur, sensiblement non contraint (17b) sont choisis parmi le groupe comprenant : les détecteurs optiques, les détecteurs électromagnétiques, les détecteurs capacitifs et équivalents.

9. Colonne de direction de véhicule selon la revendication 8, **caractérisée en ce que** les moyens de mesure comprennent au moins une sonde à effet Hall (23) disposée dans un logement du second anneau extérieur sensiblement non contraint (17b).

10. Colonne de direction de véhicule selon l'une quelconque des revendications 1 à 9, **caractérisée en ce que** les moyens de mesure du couple appliqué à l'arbre de transmission sont disposés, de manière amovible, dans l'armature de l'organe de commande manuelle.

11. Colonne de direction de véhicule selon la revendication 10, **caractérisée en ce que** l'organe de commande manuelle est un volant pourvu d'une jante au moyen de mesure des contraintes.

12. Colonne de direction selon l'une quelconque des revendications 1 à 11, **caractérisée en ce qu'**elle comporte un connecteur toumant ajusté sur l'arbre de transmission de la colonne, ledit connecteur tournant permettant la connexion entre un circuit électronique (12) du capteur de couple et le moyen d'assistance de direction.

13. Colonne de direction selon la revendication 12, **caractérisée en ce qu'**elle comporte en outre un coussin gonflable de sécurité, le connecteur tournant servant à la connectique du boîtier de coussin gonflable.

14. Colonne de direction de véhicule selon l'une quelconque des revendications 1 à 13, **caractérisée en ce qu'**elle est de type découplée.

15. Colonne de direction de véhicule selon l'une quelconque des revendications 1 à 13, **caractérisée en ce qu'**elle comporte un boîtier de direction transformant le mouvement de rotation de l'arbre de transmission en déplacement angulaire de la bielle pendante qui provoque le braquage de roues.

16. Colonne de direction de véhicule selon la revendication 15, **caractérisée en ce qu'**elle comporte des moyens d'assistance dont le déclenchement dépend notamment du couple appliqué sur l'arbre de transmission par la manoeuvre de l'organe de commande.

17. Colonne de direction de véhicule selon la revendication 16, **caractérisée en ce qu'**elle comporte des moyens calculateurs de l'assistance adressant des signaux aux moyens de commande des moyens d'assistance en fonction du coupla de braquage appliqué à l'arbre de transmission.

## Claims

1. A vehicle steering column comprising a manual control member for applying a torque on the drive shaft of the column, said column being provided with means for measuring the torque applied to said drive shaft, **characterised in that** the means for measuring the torque applied to the drive shaft are formed from an assembly having a certain rigidity comprising:
- a displaceable first outer ring (17a);
- a second outer ring, substantially unstressed (17b), placed at a distance from the displaceable outer ring (17a);
- an inner ring (16) immovably attached rotation-wise to a column (2) on which the torque to be measured is applied, the displaceable outer ring (17a) being capable of being immovably attached rigidly to the means (5) applying the torque to be measured on the column, the displaceable outer ring (17a) being assembled with the inner ring (16) by at least one elastically deformable means (18a, 18b);
the substantially unstressed outer ring (17b) being assembled with the inner ring (16) by at least one substantially unstressed means;
the sensor comprising means of measuring (23) the small relative displacement of the displaceable outer ring (17a) with respect to the substantially unstressed outer ring (17b) when a torque is applied on the column (2) by the means (5);
the displaceable ring (17a), the substantially unstressed outer ring (17b) and the inner ring (16) being made in one piece with their connecting elements (18a, 18b, 19), the substantially unstressed outer ring (17b) carrying the means for measuring (23).

2. A vehicle steering column according to Claim 1, **characterised in that** the elastically deformable means linking the displaceable first outer ring (17a) and the inner ring (16) is a brace (18a) extending radially from the inner ring (16) to the displaceable outer ring (17a).

3. A vehicle steering column according to Claim 2, **characterised in that** it has a number of elastically deformable braces (18a) extending radially from the inner ring (16) to the displaceable first outer ring (17a).

4. A vehicle steering column according to any one of Claims 1 to 3, **characterised in that** the substantially unstressed means linking the substantially unstressed second outer ring (17b) and the inner ring (16) is a brace (19) extending radially from the inner ring (16) to the substantially unstressed second outer ring (17b).

5. A vehicle steering column according to Claim 1, **characterised in that** the elastically deformable means linking the displaceable outer ring (17a) to the inner ring (16) is a tube deformable torsion-wise (18b).

6. A vehicle steering column according to Claim 5, **characterised in that** the substantially unstressed means linking the second outer ring (17b) to the inner ring (16) is a brace (19) extending radially from the inner ring (16) to the displaceable outer ring (17a).

7. A vehicle steering column according to Claim 6, **characterised in that** two radial braces (19) disposed along a diameter of the substantially unstressed outer ring (17b) connect it to the inner ring (16).

8. A vehicle steering column according to any one of Claims 1 to 7, **characterised in that** the means of measuring the small relative displacement of the displaceable first outer ring (17a) with respect to the substantially unstressed second outer ring (17b) are chosen from amongst the group comprising: optical detectors, electromagnetic detectors, capacitive detectors and equivalent.

9. A vehicle steering column according to Claim 8, **characterised in that** the measuring means comprise at least one Hall effect probe (23) disposed in a housing in the substantially unstressed second outer ring (17b).

10. A vehicle steering column according to any one of Claims 1 to 9, **characterised in that** the means for measuring the torque applied to the drive shaft are disposed, so as to be removable, in the frame of the manual control member.

11. A vehicle steering column according to Claim 10, **characterised in that** the manual control member is a steering wheel provided with a rim at the stress measuring means.

12. A steering column according to any one of Claims 1 to 11, **characterised in that** it has a rotary connector fitted on the drive shaft of the column, said rotary connector allowing the connection between an electronic circuit (12) of the torque sensor and the steering assistance means.

13. A steering column according to Claim 12, **characterised in that** it also has an air-bag, the rotary connector serving as the connector for the air-bag casing.

14. A vehicle steering column according to any one of Claims 1 to 13, **characterised in that** it is of the decoupled type.

15. A vehicle steering column according to any one of Claims 1 to 13, **characterised in that** it has a steering box converting the rotating movement of the drive shaft into angular displacement of the steering rod which brings about turning of the wheels.

16. A vehicle steering column according to Claim 15, **characterised in that** it has assistance means whose initiation depends notably on the torque applied to the drive shaft by operation of the control member.

17. A vehicle steering column according to Claim 16, **characterised in that** it has assistance calculation means sending signals to the means for controlling the assistance means, depending on the turning torque applied to the drive shaft.

## Patentansprüche

1. Fahrzeuglenksäule mit einem manuellen Steuerorgan zur Anwendung eines Moments auf die Antriebswelle der Säule, wobei die genannte Säule mit Messmitteln des auf die genannte Antriebswelle angewendeten Moments versehen ist, in welcher die Messmittel des auf die Antriebswelle angewendeten Moments aus einer eine bestimmte Festigkeit aufweisenden, Folgendes umfassenden Struktur gebildet werden:
- einen ersten verschiebbaren äußeren Ring (17a);
- einen zweiten äußeren, deutlich nicht gesteuerten, entfernt vom verschiebbaren äußeren Ring (17a) angebrachten Ring (17b);
- einen inneren, in Rotation mit einer Säule (2), auf die das zu messende Moment angewendet wird, fest verbundenen Ring (16), wobei der äußere verschiebbare Ring (17a) geeignet ist, steif mit dem das zu messende Moment auf die Säule anwendende Mittel (5) fest befestigt zu werden, wobei der verschiebbare äußere Ring (17a) mittels wenigstens eines elastisch verformbaren Mittels (18a, 18b) mit dem inneren Ring (16) verbunden wird;
wobei der äußere, deutlich nicht gesteuerte Ring (17b) mit dem inneren Ring (16) durch wenigstens ein deutlich nicht gesteuertes Mittel verbunden wird;
wobei der Sensor Messmittel (23) der kleinen Verschiebung relativ zum verschiebbaren äußeren Ring (17a) im Verhältnis zum deutlich nicht gesteuerten, äußeren Ring (17b) umfasst, wenn ein Moment durch das Mittel (5) auf die Säule (2) angewendet wird;
wobei der verschiebbare Ring (17a), der deutlich nicht gesteuerte äußere Ring (17b) und der innere Ring (16) aus demselben Material wie ihre Verbindungselemente (18a, 18b, 19) bestehen, wobei der deutlich nicht gesteuerte äußere Ring (17b) die Messmittel (23) trägt.

2. Fahrzeuglenksäule gemäß Anspruch 1, **dadurch gekennzeichnet, dass** das elastisch verformbare, den ersten verschiebbaren äußeren Ring (17a) und den inneren Ring (16) verbindende Mittel ein sich radial vom inneren Ring (16) zum verschiebbaren äußeren Ring (17a) erstreckender Balken (18a) ist.

3. Fahrzeuglenksäule gemäß Anspruch 2, **dadurch gekennzeichnet, dass** er mehrere elastisch verformbare, sich vom inneren Ring (16) zum ersten verschiebbaren äußeren Ring (17a) erstreckende Balken (18a) umfaßt.

4. Fahrzeuglenksäule gemäß Anspruch 1 bis 3, **dadurch gekennzeichnet**, das das deutlich nicht gesteuerte, den zweiten deutlich nicht gesteuerten äußeren Ring (17b) und den inneren Ring (16) verbindende Mittel ein sich radial vom inneren Ring (16) zum zweiten, deutlich nicht gesteuerten äußeren Ring (17b) erstreckender Balken (19) ist.

5. Fahrzeuglenksäule gemäß Anspruch 1, **dadurch gekennzeichnet, dass** das elastisch verformbare, den verschiebbaren äußeren Ring (17a) mit dem inneren Ring (16) verbindende Mittel ein in Drehung verformbares Rohr (18b) ist.

6. Fahrzeuglenksäule gemäß Anspruch 5, **dadurch gekennzeichnet, dass** das deutlich nicht gesteuerte, den zweiten äußeren Ring (17b) mit dem inneren Ring (16) verbindende Mittel ein sich radial vom inneren Ring (16) zum verschiebbaren äußeren Ring (17a) erstreckender Balken (19) ist.

7. Fahrzeuglenkstange gemäß Anspruch 6, **dadurch gekennzeichnet, dass** zwei radiale, gemäß einem Durchmesser des deutlich nicht gesteuerten, äußeren Rings (17b) angeordnete Balken (19) sie mit dem inneren Ring (16) verbinden.

8. Fahrzeuglenkstange gemäß Anspruch 1 bis 7, **dadurch gekennzeichnet, dass** die Messmittel der kleinen Verschiebung relativ zum ersten verschiebbaren äußeren Ring (17a) im Verhältnis zum zweiten äußeren, deutlich nicht gesteuerten Ring (17b) aus der Gruppe ausgewählt sind, umfassend: optische Sensoren, elektromagnetische Sensoren, kapazitive Sensoren und dergleichen.

9. Fahrzeuglenkstange gemäß Anspruch 8, **dadurch gekennzeichnet, dass** die Messmittel wenigstens eine in eine Aufnahme des zweiten, deutlich nicht gesteuerten, äußeren Rings (17b) angeordnete Hallsonde (23) umfassen.

10. Fahrzeuglenksäule gemäß Anspruch 1 bis 9, **dadurch gekennzeichnet, dass** die Messmittel des auf die Antriebswelle angewendeten Moments abnehmbar in der Umhüllung des manuellen Steuerorgans angeordnet sind.

11. Fahrzeuglenksäule gemäß Anspruch 10, **dadurch gekennzeichnet, dass** das manuelle Steuerorgan ein mit einem Radkranz mit Messmitteln der Steuerungen versehenes Lenkrad ist.

12. Fahrzeuglenksäule gemäß Anspruch 1 bis 11, **dadurch gekennzeichnet, dass** sie ein sich drehendes, auf der Antriebswelle der Säule angepasstes Verbindungsstück umfasst, wobei das genannte sich drehende Verbindungsstück die Verbindung zwischen einem elektronischen Schaltkreis (12) des Drehmomentsensors und dem Servolenkungsmittel erlaubt.

13. Fahrzeuglenksäule gemäß Anspruch 12, **dadurch gekennzeichnet, dass** sie darüber hinaus einen Sicherheitsairbag umfasst, wobei das sich drehende Verbindungsstück als Anschluss des Airbaggehäuses dient.

14. Fahrzeuglenksäule gemäß Anspruch 1 bis 13, **dadurch gekennzeichnet, dass** sie vom entkoppelten Typ ist.

15. Fahrzeuglenksäule gemäß Anspruch 1 bis 13, **dadurch gekennzeichnet, dass** sie ein die Rotationsbewegung der Antriebswelle in eine winkelförmige Verschiebung der hängenden Pleuelstange, die das Einschlagen der Räder hervorruft, umwandelndes Lenkgehäuse umfaßt.

16. Fahrzeuglenksäule gemäß Anspruch 15, **dadurch gekennzeichnet, dass** sie Servolenkungsmittel umfasst, deren Auslösung insbesondere von dem auf die Antriebswelle durch die Betätigung des Steuerorgans angewendeten Moment abhängt.

17. Fahrzeuglenksäule gemäß Anspruch 16, **dadurch gekennzeichnet, dass** sie an die Steuermittel der Servomittel Signale in Abhängigkeit des auf die Antriebswelle angewendeten Einschlagmoments sendendes Berechnungsmittel der Servolenkung umfaßt.
